# FASCICULE DE BREVET EUROPEEN

(11) **EP 0 442 822 B1**
(45) Date de publication et mention de la délivrance du brevet: **07.12.1994**
(21) Numéro de dépôt: 91400400.7
(22) Date de dépôt: 15.02.1991
(51) Int. Cl.: F41F 3/042, F41A 19/65

(54) **Chargeur de tir de cartouches, procédé de fabrication d'un tel chargeur et application à un lance-cartouche**
Magazin für Patronen, Herstellungsverfahren eines solchen Magazins und Verwendung in einer Patronenabschussvorrichtung
Cartridge magazine, manufacturing method thereof and application to a cartridge launcher

(30) Priorité: 16.02.1990 FR 9001914
(43) Date de publication de la demande: 21.08.1991
(73) Titulaire: MATRA DEFENSE, 75116 Paris (FR)
(72) Inventeur: Pilaud, Christian, F-78117 Toussus le Noble (FR)
(74) Mandataire: Fort, Jacques

(56) Documents cités:
- EP-A- 0 022 896
- EP-A- 0 314 442
- FR-A- 353 200
- FR-A- 1 456 090
- FR-A- 2 206 805
- US-A- 2 900 874

## Description

L'invention a pour objet un chargeur comprenant un fond et un casier à ceinture et cloisons entretoisées constituant un réseau d'alvéoles de réception de cartouches individuelles munies chacune d'une charge de dépotage.

On connaît déjà (FR-A-353 200) un chargeur alvéolaire destiné à recevoir des pétards enflammables successivement.

On connaît également de tels chargeurs, destinés à être embarqués sur véhicule et notamment sur avion ; ou bien leurs cloisons sont prévues pour résister à la pression des gaz d'éjection sans se déformer, ou bien les cartouches doivent être munies de douilles de résistance à la pression des gaz d'éjection.

L'invention vise notamment à fournir un tel chargeur qui tout à la fois présente une rigidité suffisante pour résister aux efforts qui apparaissent lors de l'éjection des cartouches et à ceux dus au montage et à l'emport sur un véhicule, offre un volume de stockage de cartouches élevé à encombrement donné, et reste de coût modéré.

Dans ce but l'invention propose notamment un chargeur dont le casier est constitué d'une seule pièce en résine thermo-durcissable renforcée par des faisceaux de fibres longues, orientées transversalement à l'axe des alvéoles pour résister au gonflement des alvéoles lors du tir, la teneur en fibres étant supérieure à 50% et avantageusement comprise entre 60% et 70% en poids.

Les fibres sont considérées comme longues lorsque leur longueur moyenne est nettement supérieure à celle d'un côté d'un alvéole. Pour des raisons d'économie, on utilisera généralement des fibres de carbone, bien que des fibres d'autre nature, et notamment des fibres de bore, puissent également être employées. Dans la paroi latérale du casier, constituant la ceinture, peuvent être noyés des éléments de nature différente, tels que des éléments de raccordement, bloqués dans la masse de résine. Les faisceaux de fibres peuvent se présenter sous des formes diverses, notamment de filaments accolés, de mèches, de tresses et de tissus.

L'invention propose également un procédé de fabrication d'un chargeur du genre ci-dessus défini, caractérisé en ce qu'on revêt des noyaux reproduisant la forme des alvéoles avec des fibres longues sèches en faisceaux orientés transversalement à l'axe des alvéoles et participant chacune à la constitution de la paroi de plusieurs alvéoles adjacents, on empile les noyaux revêtus pour constituer le réseau des alvéoles, on soumet les fibres à un traitement d'augmentation de la capillarité dans le sens axial, on injecte une résine thermo-durcissable dans les faisceaux, on la polymérise et on extrait les noyaux. Après empilement et avant injection, la ceinture est constituée avantageusement par enroulement d'un faisceau de fibres sèches autour de l'empilement de noyaux revêtus.

Le traitement de capillarité appliqué aux faisceaux destinés à s'intégrer à la paroi des alvéoles, c'est-à-dire les croisillons et la ceinture, peut notamment être constituée par des tissus du type commercialisé sous le nom "INJECTEX".

L'invention a également pour objet un lance-cartouches comprenant un chargeur du genre ci-dessus défini et une culasse destinée à recevoir le fond dudit chargeur et contenant un équipement de mise à feu comportant n voies de commande de tir, permettant, grâce à un système de commutation amélioré, le tir de plusieurs cartouches par voie. Dans ce but, une des voies de tir au moins parmi les n voies de tir est montée de façon à commander un 'commutateur électrique permettant de commander à volonté soit le tir des cartouches d'un premier jeu, soit le tir des cartouches d'un second jeu, en même nombre que celles du premier jeu.

Cette dernière disposition présente en elle-même un intérêt qui permet de l'utiliser indépendamment de la constitution de casier définie ci-dessus. Elle permet en effet, à partir de n voies toutes identiques, de commander soit le tir inviduel de n cartouches avec un chargeur standard, soit de 2(n-1) cartouches avec un chargeur tel qu'il vient d'être défini, soit même de 4(n-3) cartouches avec un montage en cascade.

L'invention sera mieux comprise à la lecture de la description qui suit de modes particuliers de réalisation de l'invention, donnés à titre d'exemples non limitatifs. La description se réfère aux dessins qui l'accompagnent, dans lesquels :
- la Figure 1 est un schéma montrant, en perspective, la constitution d'un chargeur et d'une cartouche destinée à y être placée ;
- les Figures 2, 3 et 4 montrent plusieurs modes possibles de constitution d'un panier de chargeur suivant l'invention ;
- les Figures 5 et 6 sont des schémas de principe de deux dispositifs de tir de cartouches utilisables dans un lance-cartouches contenant un chargeur du genre montré en Figure 1.

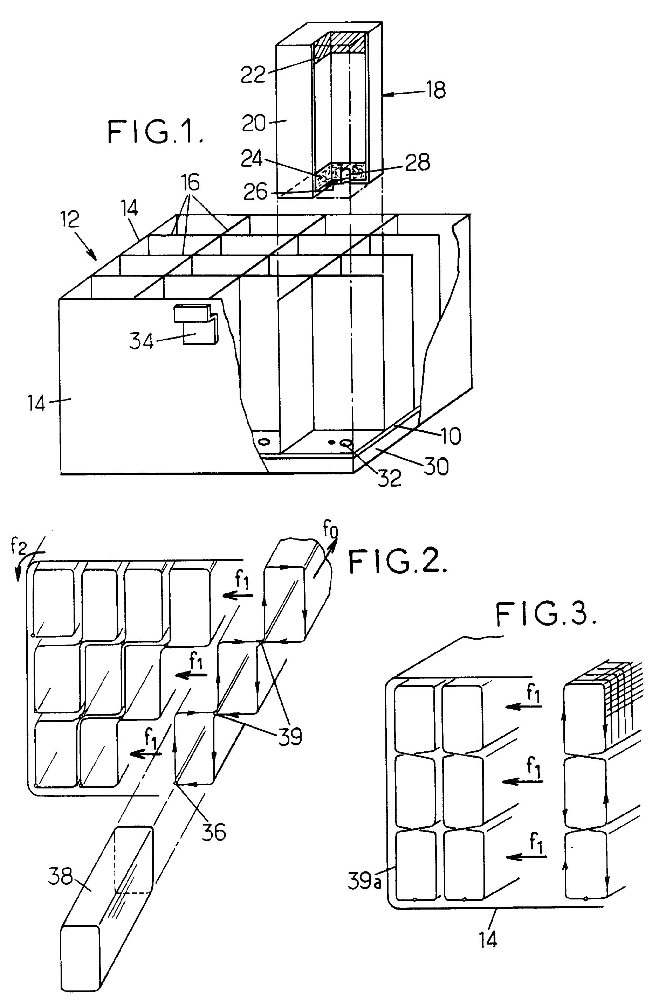

Le chargeur montré en Figure 1 peut être regardé comme comprenant un fond 10 et un panier 12 solidaires l'un de l'autre. Le panier est d'une seule pièce et peut être regardé comme ayant une ceinture 14 et des croisillons 16 délimitant des alvéoles identiques de forme polygonale, rectangulaire dans le cas illustré, destinés chacun à recevoir une cartouche 18. Cette cartouche est généralement destinée à disperser des leurres. Celle qui est représentée sur la Figure 1 comporte une enveloppe 20, qui peut être mince bien qu'à section rectangulaire car elle n'aura pas à supporter la pression d'éjection. L'enveloppe 20 est fermée par un fond et par un couvercle 22. Entre le fond et les leurres est placée une charge de dépotage 24. Le fond est traversé par une amorce de mise à feu électrique 26 et par un trou de fixation 28. Dans la ceinture peuvent être encastrés des éléments de fixation tels que des crochets 34, souvent métalliques.

Le fond 10 du chargeur est prévu pour être fixé à une culasse 30 contenant l'équipement de mise à feu. Dans le fond sont ménagés, en face de chaque alvéole, un trou 32 de passage d'une vis de fixation de la cartouche et un trou de passage d'un contact électrique d'alimentation de l'amorce 26.

La Figure 2 montre un premier mode de fabrication possible du panier. On replie une nappe de fibres et on raccorde les deux extrémités par une couture 36, la nappe étant sous forme d'un tissu ayant, outre des fibres longues en faisceaux orientées transversalement aux alvéoles, des fibres dirigées dans la direction de la flèche fO, c'est-à-dire parallèlement à la direction de la couture. Puis, par des coutures à plat intermédiaires 39, on fractionne la nappe rendue tubulaire par la couture 36, en des compartiments destinés chacun à former les parois d'un alvéole. Dans ces compartiments sont introduits des noyaux 38 de section correspondant à celle que l'on souhaite donner aux alvéoles. On constitue ainsi des motifs élémentaires, comprenant trois noyaux 38 dans le cas illustré sur la Figure 2 (exception faite des motifs d'angle). Ces motifs sont empilés, comme indiqué par les flèches f1 puis bloqués les uns contre les autres par enroulement, suivant la direction f2, de faisceaux de fibres sous forme de tissus, destinés à constituer la ceinture.

Les tissus sont ensuite soumis à un traitement destiné à augmenter leur capillarité dans le sens de la flèche f0. L'ensemble est placé dans un moule-presse à injection de matière plastique thermo-durcissable, éventuellement après avoir été recouvert d'une nappe de fibres destinée à constituer le fond du chargeur, et muni d'éléments à noyer dans la ceinture. Le moule est fermé de façon étanche et un mélange de résine et d'accélérateur de polymérisation est injecté. Le moule est chauffé au moins jusqu'à durcissement partiel. Le casier est retiré de la presse, les noyaux sont extraits et les trous de fixation et d'accès aux amorces 26 sont percés dans le fond. Pour faciliter l'enlèvement des noyaux, une dépouille de l'ordre de 0,5/1 000, tolérable sans inconvénient pour le tir des cartouches, est prévue. Le démoulage est facilité en constituant les noyaux en un matériau ayant un coefficient de dilatation thermique nettement différent de celui du composite. On peut notamment utiliser des noyaux en alliage léger, ayant subi un traitement de surface évitant les risques de grippage, tel qu'un durcissement superficiel et/ou ayant reçu un revêtement en un matériau à faible coefficient de frottement. Une pellicule de matériau de démoulage peut également être prévue.

Dans la pratique, une durée de polymérisation en moule-presse après fermeture et injection d'environ deux heures à 60°C est satisfaisante avec la plupart des résines thermo-durcissables actuelles. Après démoulage, une cuisson supplémentaire hors du moule-presse permet d'achever la polymérisation.

Grâce à la mise en oeuvre du procédé qui vient d'être décrit, utilisant l'injection sur tissu sec, on réduit considérablement le coût de fabrication : en effet il n'y a pas à stocker des matériaux en chambre froide. Les chutes inévitables portent sur le matériau sec, beaucoup moins coûteux qu'un pré-imprégné. Le cycle en presse peut être court. Tous les éléments à fixer au fond ou à la ceinture peuvent être prévus lors du moulage. L'utilisation de pré-formes, constituées par une nappe de tissu présentant des coutures à plat, permet un gain de temps.

Dans la variante de réalisation montrée en figure 3, on réalise chaque rangée d'alvéoles à partir d'une pré-forme 39a directement tissée aux dimensions requises. Ces pré-formes, munies de noyaux (non représentés) sont empilées dans le sens des flèches f1, puis bloquées à l'aide des faisceaux de fibres ou du tissu destinés à constituer la ceinture 14. Dans ce mode de réalisation comme dans le précédent, le traitement d'augmentation de capillarité est appliqué à l'ensemble des tissus destinés à constituer les croisillons et la ceinture.

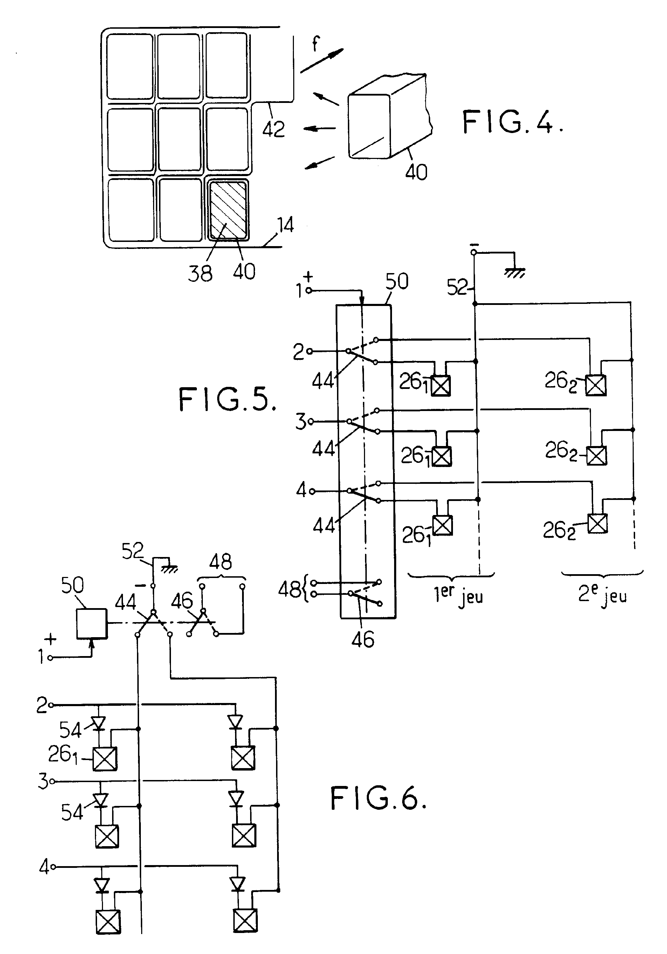

Le mode de réalisation montré en Figure 4 utilise en général des faisceaux de fibres se présentant sous deux formes différentes. Chaque alvéole est constitué par enroulement d'une tresse 40 sur un noyau 38 (dont un seul est représenté). Puis les noyaux munis des tresses sont empilés les uns sur les autres, avec interposition d'un tissu 42 plié, de sorte que chaque croisillon résulte de la superposition de deux tresses et d'une couche de tissu 42. La ceinture 14 est elle aussi constituée à l'aide d'un tissu. Dans ce cas, le traitement d'augmentation de capillarité est appliqué uniquement aux tissus destinés à constituer les couches 42 et la ceinture 14.

Comme on l'a indiqué plus haut, le chargeur monobloc en matériau thermo-plastique renforcé est utilisable dans un lance-cartouches comportant une culasse 30 qui contient l'équipement de mise à feu. Cet équipement peut notamment être porté par une carte de circuit imprimé fixée à la structure de la culasse. Classiquement, l'amorce de la cartouche à éjecter est mise à feu par un inflammateur électrique à laquelle on applique une impulsion d'énergie suffisante. La culasse comporte n voies de tir, qui, dans un lance-cartouches classique, sont affectées chacune à un alvéole. En conséquence, on ne peut tirer individuellement que n cartouches dans le cas d'un montage classique.

Suivant l'invention, l'une des voies de tir est affectée non pas à un alvéole, mais à la commande d'un commutateur électrique multiple permettant d'orienter les autres voies de tir soit vers les alvéoles d'un premier jeu, soit vers celles d'un second jeu. Dans le cas particulier illustré en Figure 5, où n = 4, la voie 1 commande un commutateur électrique multiple à trois contacts 44, qui peuvent être des contacts galvaniques ou des éléments semi-conducteurs. Un contact supplémentaire 46, également commandé par la voie 1, est placé dans un circuit de codage 48 indiquant quel est le jeu d'alvéoles commandés. Pour des raisons de sécurité, le commutateur électrique est de préférence galvanique, rectiligne ou rotatif, et il est commandé par un actuateur 50 qui peut être un micro-moteur, un électro-aimant, ou même un vérin pyrotechnique si un fonctionnement unique de l'actuateur 50 est prévu.

Dans le cas illustré sur la Figure 6, les deux jeux d'alvéoles sont équipés d'un circuit de retour commun 52 vers la masse. Dans l'état initial de l'actuateur 50, les voies 2, 3 et 4 sont orientées de façon à permettre le tir des cartouches contenues dans le premier jeu d'alvéoles, c'est-à-dire de mettre à feu les amorces 26₁. Une fois toutes les cartouches du premier jeu d'alvéoles tirées, la commande de l'actuateur 50 permet de mettre à feu les amorces 26₂ des cartouches contenues dans le second jeu d'alvéoles.

Cette disposition permet de tirer individuellement chaque cartouche en respectant les cadences de tir imposées. Son état est identifié sans ambiguité lorsque le contact supplémentaire 46 est prévu.

Dans la variante de réalisation montrée en Figure 6 (où les organes correspondant à ceux de la Figure 5 sont désignés par le même numéro de référence), l'actuateur 50 commande un commutateur ayant seulement un contact de sélection de jeu 44 et un contact supplémentaire 46. Le contact 44 est placé sur le circuit de retour vers la masse 52. Des éléments à conduction unidirectionnelle 54, tels que des diodes, interdisent l'actionnement d'une amorce 26 autre que celle de la cartouche occupant l'alvéole concerné.

Il est possible d'augmenter encore le nombre des cartouches pouvant être tirées à partir de n voies. De façon générale, en prévoyant m commutateurs en cascade, il est possible de tirer 2^{m}(n-m) cartouches à partir d'un lance-cartouche à n voies.

## Revendications

1. Chargeur comprenant un fond (10) et un panier (12) à ceinture (14) et cloisons entretoisées (16) constituant un réseau d'alvéoles de réception de cartouches individuelles munies chacune d'une charge de dépotage,
caractérisé en ce que le panier (12) est constitué d'une seule pièce en résine thermodurcissable renforcée par des faisceaux de fibres longues, orientés transversalement à l'axe des alvéoles pour résister au gonflement des alvéoles lors du tir, la teneur en fibres étant supérieure à 50% et avantageusement comprise entre 60% et 70% en poids.

2. Chargeur selon la revendication 1, caractérisé en ce que le faisceau de fibres se présente sous forme de filaments accolés, de mèches, de tresses ou de tissus.

3. Chargeur selon la revendication 1 ou 2, caractérisé en ce que les fibres sont en carbone.

4. Procédé de fabrication d'un chargeur selon l'une quelconque des revendications 1 à 3,
caractérisé en ce qu'on revêt des noyaux reproduisant la forme des alvéoles avec des fibres longues sèches en faisceaux orientés transversalement à l'axe des alvéoles et participant chacune à la constitution de la paroi de plusieurs alvéoles adjacents, on empile les noyaux revêtus pour constituer le réseau des alvéoles, les fibres étant soumises à un traitement d'augmentation de la capillarité dans le sens axial, on injecte une résine thermodurcissable dans les faisceaux et on la polymérise avant d'extraire les noyaux.

5. Procédé selon la revendication 4, caractérisé en ce que, après empilement et avant l'injection, on constitue la ceinture du panier par enroulement d'un faisceau de fibres sèches autour de l'empilement de noyaux revêtus.

6. Procédé selon la revendication 4 ou 5, caractérisé en ce que, pour revêtir les noyaux, on replie une nappe de fibres, on raccorde les deux extrémités de la nappe par une couture (36), la nappe étant sous forme d'un tissu ayant des fibres dirigées parallèlement à la direction de la couture, et on fractionne la nappe par des coutures à plat intermédiaires (39) en des compartiments dans lesquels on introduit lesdits noyaux.

7. Procédé selon la revendication 4, 5 ou 6, caractérisé en ce qu'on donne aux noyaux une dépouille de l'ordre de 0,5/1000.

8. Lance cartouche comprenant un chargeur selon la revendication 1, 2 ou 3 et une culasse (30) destinée à recevoir le fond (10) dudit chargeur et contenant un équipement de mise à feu ayant n voies de commande de tir, dont l'une au moins parmi les n voies est connectée de façon à commander un commutateur électrique (44) permettant de commander à volonté soit le tir des cartouches d'un premier jeu d'alvéoles, soit le tir des cartouches d'un second jeu, en même nombre que celles du premier jeu.

## Patentansprüche

1. Magazin, bestehend aus einem Boden (10) und einem Korb (12) mit einer Außenwand (14) und Zwischenwänden (16), die ein Netz von Zellen zur Aufnahme von einzelnen, jeweils mit einer Umfülladung versehenen Patronen bilden,
dadurch gekennzeichnet, daß der Korb (12) aus einem einzigen Teil aus wärmeaushärtendem Harz besteht, das mit Langfaserbündeln verstärkt ist, die in Querrichtung zur Achse der Zellen ausgerichtet ist, um dem Aufblähen der Zellen beim Schuß zu widerstehen, wobei der Fasergewichtsanteil mehr als 50 % und vorzugsweise zwischen 60 % und 70 % beträgt.

2. Magazin nach Anspruch 1,
dadurch gekennzeichnet, daß das Faserbündel als aneinanderhängende Fäden, als Faserbärte, als Geflechte oder als Gewebe ausgeführt ist.

3. Magazin nach Anspruch 1 oder 2,
dadurch gekennzeichnet, daß die Fasern aus Kohlenstoff bestehen.

4. Verfahren zur Herstellung eines Magazins nach einem der Ansprüche 1 bis 3,
dadurch aekennzeichnet, daß Kerne, die die Form der Zellen erzeugen, mit gebündelten, trockenen, langen Fasern beschichtet werden, die in Querrichtung zur Achse der Zellen ausgerichtet sind und jeweils zur Bildung der Wand von mehreren aneinandergrenzenden Zellen beitragen, die beschichteten Kerne aufeinandergestapelt werden, um die Netze von Zellen zu bilden, wobei die Fasern einer Behandlung zur Erhöhung der Kapillarität in axialer Richtung unterzogen werden, ein wärmeaushärtendes Harz in die Bündel eingespritzt wird und dieses polymerisiert wird, bevor die Kerne herausgenommen werden.

5. Verfahren nach Anspruch 4,
dadurch gekennzeichnet, daß nach dem Aufstapeln und vor dem Einspritzen die Außenwand des Korbes durch Umwickeln des Stapels beschichteter Kerne mit einem Bündel trockener Fasern gebildet wird.

6. Verfahren nach Anspruch 4 oder 5,
dadurch gekennzeichnet, daß zum Beschichten der Kerne eine Lage Fasern um diese herumgebogen wird, die beiden Enden der Lage mit einer Naht (36) verbunden werden, wobei die Lage in Form von Gewebe mit Fasern besteht, die parallel zur Richtung der Naht ausgerichtet sind, und die Lage durch flache Zwischennähte (39) in Abteilungen unterteilt wird, in die die aenannten Kerne eingeführt werden.

7. Verfahren nach Anspruch 4, 5 oder 6,
dadurch gekennzeichnet, daß den Kernen eine Rücknahme in der Größenordnung von 0,5/1000 gegeben wird.

8. Patronenabschußvorrichtung, die ein Magazin nach Anspruch 1, 2 oder 3 und ein Bodenstück (30), das dazu bestimmt ist, den Boden (10) des genannten Magazins aufzunehmen, umfaßt und eine Zündeinrichtung mit n Schußauslösemoglichkeiten aufweist, von denen mindestens eine der n Möqlichkeiten so angeschlossen ist, daß sie einen elektrischen Schalter (44) steuert, mit dem nach Belieben entweder der Abschuß der Patronen einer ersten Zellengruppe oder der Abschuß der Patronen einer zweiten Zellengruppe mit der gleichen Anzahl wie bei der ersten Gruppe ausgelöst werden kann.

## Claims

1. A magazine comprising a bottom (10) and a box (12) having a belt (14) and braced partitions (16) forming a network of cells receiving individual cartridges each furnished with an expelling charge,
characterized in that the box (12) is formed by a single thermosetting resin member reinforced with bundles of long fibres which are oriented transversely of the axis of the cells to withstand the swelling of the cells during firing, the fibre content being higher than 50% and advantageously between 60% and 70% by weight.

2. A magazine according to Claim 1, characterized in that the bundle of fibres takes the form of joined filaments, coarse rovings, braids or fabrics.

3. A magazine according to Claims 1 or 2, characterized in that the fibres are carbon fibres.

4. A process for the production of a magazine according to any of Claims 1 to 3, characterized in that cores reproducing the shape of the cells are coated with dry long fibres in bundles oriented transversely of the axis of the cells and each participating in forming the wall of a number of adjacent cells, the coated cores are stacked to form the network of cells, the fibres being subjected to a treatment for increasing capillarity in the axial direction, a thermosetting resin is injected into the bundles, and the resin is polymerised before the cores are extracted.

5. A process according to Claim 4, characterized in that after stacking and prior to injection, the belt of the box is formed by the winding of a bundle of dry fibres around the stack of coated cores.

6. A process according to Claims 4 or 5, characterized in that to coat the cores, a sheet of fibres is folded, the two ends of the sheet are connected by a seam (36), the sheet taking the form of a fabric having fibres directed parallel with the direction of the seam, and the sheet is divided by intermediate flat seams (39) into compartments into which said cores are introduced.

7. A process according to Claim 4, 5 or 6 characterized in that the cores are given a clearance of the order of 0.5/1000.

8. A cartridge launcher comprising a magazine according to Claim 1, 2 or 3 and a base (30) adapted to receive the bottom (10) of said magazine and containing firing equipment having n firing control paths, one at least of the n paths being so connected as to control an electric switch (44) aligning the control at a choice of either the firing of the cartridges of a first set of cells, or the firing of the cartridges of a second set, in the same number as the cartridges of the first set.
